Europäisches Patentamt

European Patent Office

Office européen des brevets

(11) Numéro de publication: **0 044 371**
**A1**

(12) **DEMANDE DE BREVET EUROPEEN**

(21) Numéro de dépôt: **80401090.8**

(22) Date de dépôt: **23.07.80**

(51) Int. Cl.³: **E 04 F 15/02**
E 04 F 13/08, E 04 C 2/10
E 04 B 1/62

(43) Date de publication de la demande:
27.01.82 Bulletin 82/4

(84) Etats contractants désignés:
BE DE GB IT NL SE

(71) Demandeur: **L'IMMOBILIERE THIONVILLOISE Société**
**Anonyme Française**
**1, square Gounod**
**F-57120 Rombas(FR)**

(72) Inventeur: **Bourgeois, Emmanuel**
**35, rue des Archives**
**F-75004 Paris(FR)**

(74) Mandataire: **Cuer, André**
**CABINET CUER 30, rue de Léningrad**
**F-75008 Paris(FR)**

(54) **Dalles emboîtables pour revêtements étanches continus.**

(57) L'invention a trait à de nouvelles dalles sous forme d'élément modulaires emboîtables entre eux pour la réalisation des sols et parois tant à l'intérieur de constructions, comme par example pour des pièces humides, qu'à l'extérieur comme terrasses et toitures.

Les dalles comportent une semelle unitaire (1) en matière plastique munie: à sa base d'une succession de pontets (2) en forme d'arches dont les piètements reposent sur le support de base à recouvrir et, à sa partie supérieure, d'une assiette (3) apte à recevoir un matériau décoratif tel que des assemblages de carreaux de céramique (8) ou tout autre revêtement continu; elles sont munies sur chaque côté de leur pourtour de gorges (4) et de saillies (5) permettant de faire coopérer entre elles plusieurs dalles adjacentes. Plusieurs variantes de réalisation de dalles de montage et d'application sont détaillées dans la description.

./...

Croydon Printing Company Ltd.

FIG 4

La présente invention a trait au domaine des revêtements de surfaces. Elle concerne tout spécialement de nouvelles dalles sous forme d'éléments modulaires emboîtables à surface plastique ou comportant des assemblages de carreaux de céramique ou autre matériau, disposés sur une plaque à talon de conformation spéciale, ainsi que les revêtements obtenus et leur utilisation pour la couverture de surfaces diverses à l'intérieur ou à l'extérieur de bâtiments.

Les revêtements de sols, ainsi d'ailleurs que de murs, posent des problèmes particuliers, notamment lorsqu'ils sont appliqués sur des surfaces sensibles à l'humidité, comme par exemple dans les pièces dites humides d'un appartement telles que les salles de bains ou analogues. En effet, l'humidité latente et/ou provoquée par éclaboussures ou débordements d'eau entraîne une dégradation de l'élément porteur (sol ou mur) par manque d'autoventilation du fait que le revêtement appliqué sur cet élément est la plupart du temps étanche, par exemple matière plastique, carrelage ou analogue. C'est le cas, notamment, des revêtements plastiques appliqués sur les parquets existants en bois dans les salles d'eau des bâtiments et appartements anciens à restaurer : l'eau d'infiltration et de condensation provoque le pourrissement progressif du bois.

L'invention a pour but d'apporter une solution à ce problème et de pallier les inconvénients précités en offrant un revêtement à la fois étanche aux projections d'eau et apte à assurer l'évacuation de l'humidité latente des éléments sousjacents de structure.

Un autre but de l'invention est de proposer un revêtement, possédant les qualités susvisées et utilisable sur tous types de supports de base, sous la forme de plaques ou dalles de dimensions appropriées dans lesquelles peuvent être déjà intégrés des assemblages de matériaux fonctionnels ou décoratifs tels que bois, pierre, carreaux de céramique, matière plastique ou autre.

On a, certes, déjà décrit et en partie commercialisé des panneaux de carrelage pour revêtements muraux permettant une pose rapide de carreaux de céramique sur un mur, en remplaçant le collage et l'assemblage traditionnels des éléments unitaires tout en fournissant une surface externe pratiquement étanche à l'eau. En pratique, on noie les carreaux dans une couche porteuse, généralement de la mousse de matière plastique, ou une matière alvéolaire, et l'on réalise directement les joints entre carreaux à l'aide de la matière plastique (voir par exemple brevets français n° 1 524 331, 1 564 623, 73.39232, 76.13650). De tels panneaux facilitent et accélèrent la pose de carrelages mais ils n'apportent pas de solution au problème de l'évacuation de l'humidité sous-jacente au panneau.

On a préconisé par ailleurs, pour la pose de carreaux en céramique ou analogue à l'aide de mortier sur des façades extérieures de bâtiments, de laisser dans le mortier de liaison au mur des espaces libres de façon à créer des canaux longitudinaux et/ou transversaux permettant l'écoulement de l'humidité et l'évacuation de celle-ci grâce à des interstices laissés ouverts, sans joint, entre certains carreaux. Une telle technique présente l'avantage d'éviter les tensions thermiques et le décollement des carreaux de façade (brevet français n° 1 599 609). Toutefois, visant un but et mettant en oeuvre des moyens différents, elle ne peut être appliquée à la réalisation de parois et notamment de sols de pièces d'appartement dites humides qui exigent à la fois une étanchéité parfaite de surface aux projections d'eau et une évacuation permanente de l'humidité du ou des matériaux de structure.

L'invention propose de nouvelles dalles associables entre elles pour la réalisation sur sols et parois de revêtements à surface externe étanche à l'eau et ayant une structure sous-jacente autorisant une circulation totale et permanente de fluide entre le revêtement et le matériau constitutif du sol ou de la paroi, lequel sera dénommé ci-après support de base.

L'invention propose également des dalles modulaires à emboîtement aptes à être utilisées non seulement à l'intérieur de constructions mais aussi à l'extérieur, comme par exemple pour des terrasses ou encore des toitures qui présentent l'avantage d'être légères, esthétiques, sans entretien et de grande résistance aux intempéries.

Selon leurs caractéristiques les plus générales, ces dalles comportent une semelle unitaire en matière plastique munie : à sa base d'une succession de pontets en forme d'arches dont les piétements reposent sur le support de base et, à sa partie supérieure, d'une assiette apte à recevoir un matériau fonctionnel ou décoratif ; En outre qu'elles sont munies alternativement sur chaque côté de leur pourtour, de gorges et de saillies permettant une parfaite coopération entre elles de plusieurs dalles adjacentes pour assurer l'étanchéité et la continuité géométrique du revêtement.

Ainsi, grâce à la conformation spéciale de la semelle, les revêtements selon l'invention, outre leur étanchéité à l'eau par la présence d'un élément extérieur continu, permettent d'assurer une évacuation de l'humidité latente des matériaux de structure sur lesquels les dalles sont posées. En effet, grâce à la structure ajourée de la semelle, on obtient toujours une lame d'air entre cette dernière et le support de base, cette lame étant généralement ventilée par divers moyens tels que : perforations pratiquées dans ledit support, convection d'air chaud par la présence de canalisations d'eau chaude etc... De ce fait, on évite la dégradation des matériaux du support de base, par exemple, le pourrissement d'un plancher, par infiltration et condensation d'eau, dans le cas de la rénovation d'habitats anciens par installation de salles de bains sur un tel support de base. En outre, on assure une bonne isolation phonique et obtient des revêtements définitifs et fiables. Enfin, la pose de tels revêtements correspond à une mise en oeuvre à sec, sans utilisation de mortiers ou autres liants aqueux.

Selon une caractéristique de l'invention, l'assiette de la semelle, de surface unie ou discontinue, ayant des qualités géométriques adaptées au mode de fixation des revêtements (collage, injection, etc) peut recevoir tout type de revêtement continu tel que par exemple : plaques de matière plastique habituellement utilisées pour l'étanchéité des sols, bois, pierre, marbre, carreaux de céramique ou autre matériau décoratif.

En pratique, les piètements de chaque pontet sous la semelle d'une dalle peuvent avantageusement être pourvus d'une fente de façon à constituer deux jambes dans l'intervalle desquelles peut être éventuellement insérée de la colle ou encore une pince de serrage ou clipsage lors de la pose sur le support de base. En outre, les dalles destinées à la pose sur mur sont de préférence munies d'oeillets pour faciliter la fixation par clouage, vissage ou autre moyen connu.

Conformément à un mode de réalisation particulièrement avantageux, chaque dalle est munie à l'un de ses angles d'une excroissance (par exemple circulaire) au niveau de la semelle de dalle et apte à recevoir dans une cavité une rondelle appropriée en matériau souple destinée à empêcher toute velléité de fuite ou infiltration d'eau. Cet élément en saillie sert de noeud de liaison entre les dalles lors de la pose de celles-ci sur sol, paroi ou tout autre support de base. Ledit élément peut être soit solidaire de la semelle de dalle (par exemple moulé en une seule pièce avec celle-ci) soit fixé à cette semelle par tout moyen connu de liaison.

Par ailleurs, pour assurer la liaison des dalles entre elles, on utilise un clipsage à enclenchement vertical ; pour cela, on prévoit avantageusement, sur chaque paire de parois opposées d'une dalle, à intervalles déterminés, un ensemble d'élément mâle et d'élément femelle coopérant fermement entre eux. Selon une réalisation avantageuse, l'élément mâle, en forme de U dont l'une des branches est raccourcie, porte sur l'extrémité de cette dernière un pan biseauté alors que l'élément femelle se compose d'un jambage à épaulement d'extrémité, ce dernier venant se coincer, lors de l'emboîtement vertical de deux dalles, sous le biseau de l'élément mâle.

Selon une variante de l'invention, les espaces laissés libres entre lesdits pontets peuvent être garnis d'un matériau isolant ou encore être pourvus en tout ou partie, de canalisations de fluide (par exemple d'eau ou tout autre fluide thermique). Ainsi, les revêtements à l'aide de dalles selon l'invention peuvent être utilisés aux lieu et place des dalles flottantes dans les constructions neuves. En outre, en cas de pose à l'extérieur, par exemple comme terrasses ou toitures, on peut envisager la récupération de l'énergie solaire avec fourniture d'eau chaude par les canalisations insérées dans la base des dalles. Enfin, il est possible d'équiper le matériau isolant précité de câble électrique (par exemple de type "cablosol") et d'utiliser alors le revêtement de dalles de l'invention comme radiateur pour toute pièce d'un habitat.

D'autres caractéristiques et détails apparaîtront encore au cours de la description qui suit, relative à la description de modes de réalisation non limitatifs, illustrés par les dessins schématiques des planches annexées sur lesquelles on peut voir :

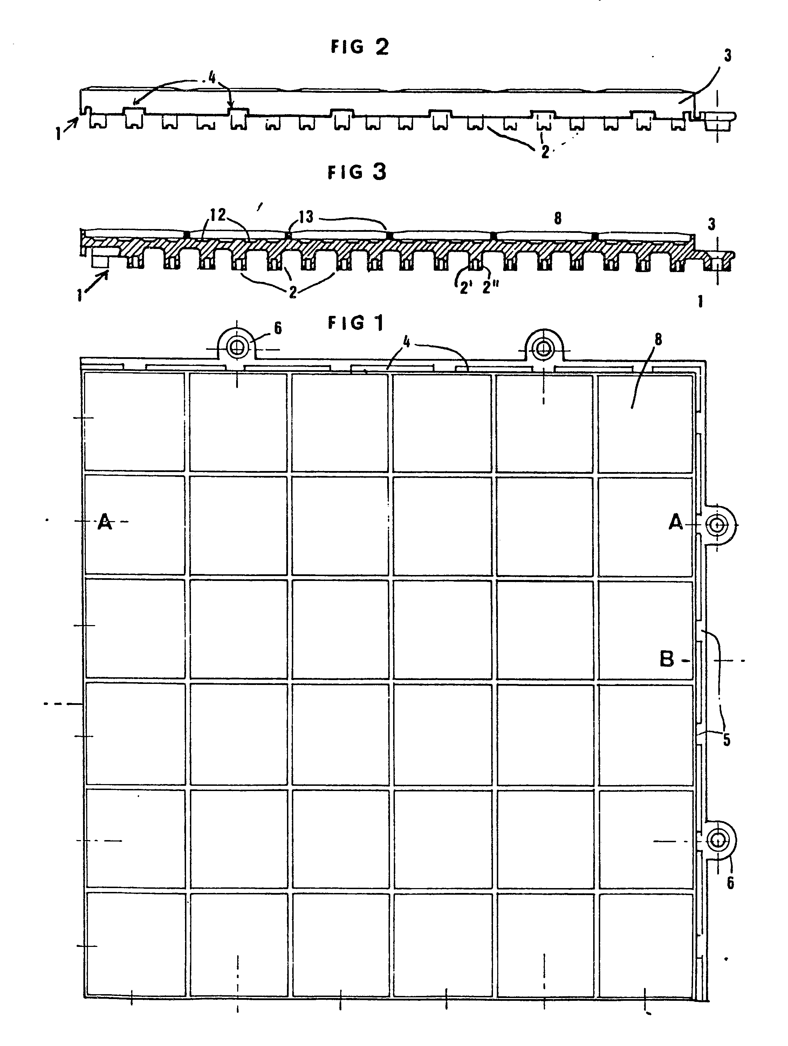

. Figure 1 : une projection sur un plan horizontal d'une dalle précarrelée selon l'invention ;

. Figure 2 : une vue de côté mâle de la dalle ;

. Figure 3 : une coupe selon A-A de la figure 1 ;

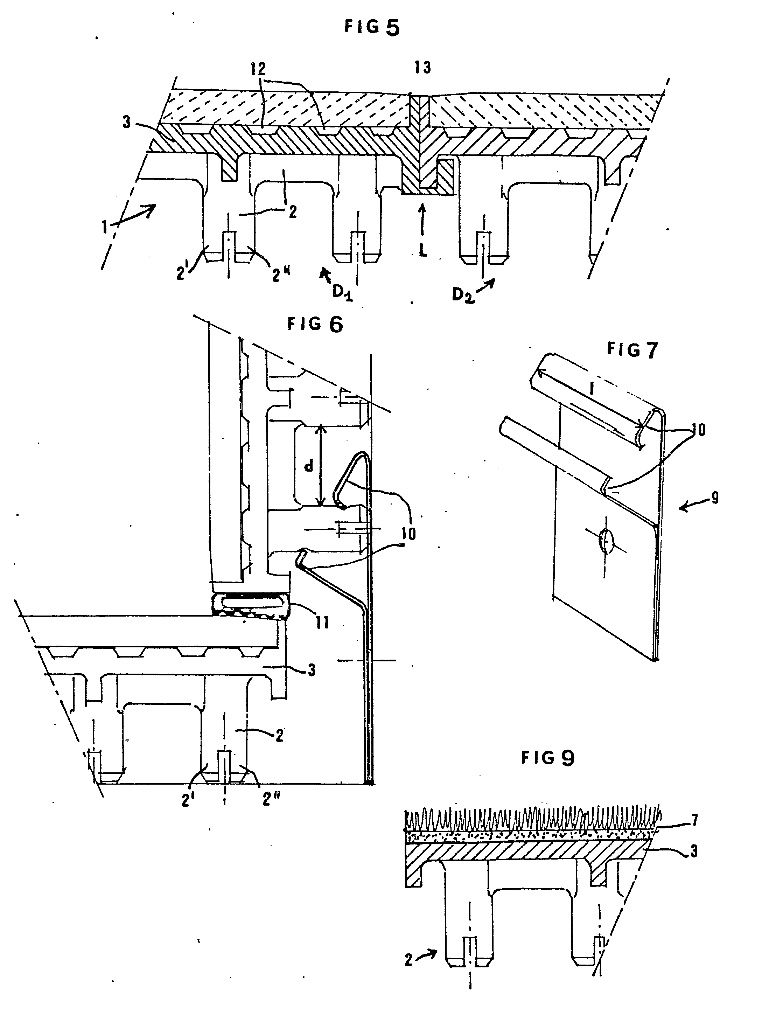

. Figure 4 : une élévation en perspective d'un angle de la dalle précitée ;

. Figure 5 : la liaison d'assemblage entre deux faces sur surface plane, la partie gauche de cette figure représentant une coupe B (partie femelle) de la figure 1 ;

. Figure 6 : la liaison entre deux plaques ou dalles lors d'une pose à angle droit sur sol et mur ;

. Figure 7 : une pièce de type pince permettant d'assurer la liaison selon la figure 6 ;

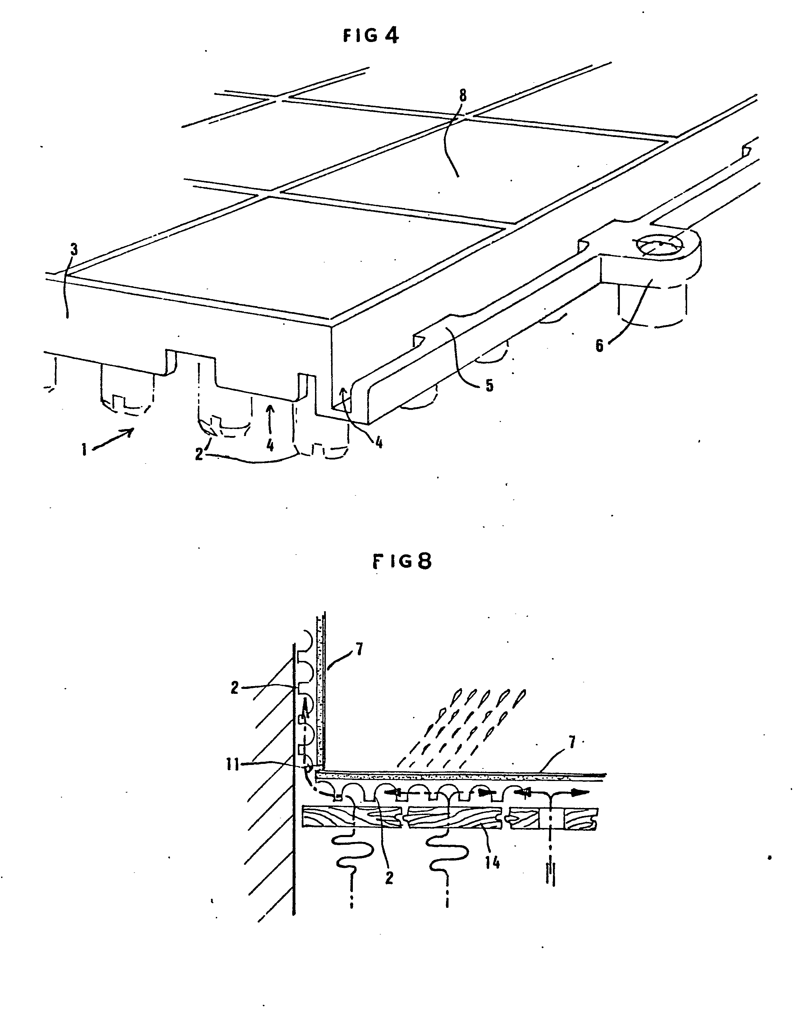

. Figure 8 : une vue très schématique de la pose de revêtements selon l'invention sur un plancher et illustrant une liaison sol-mur avec ventilation sous-jacente ;

. Figure 9 : une vue partielle, en coupe, d'une autre dalle selon l'invention dont l'assiette de surface unie reçoit un revêtement continu (et non des carreaux) ;

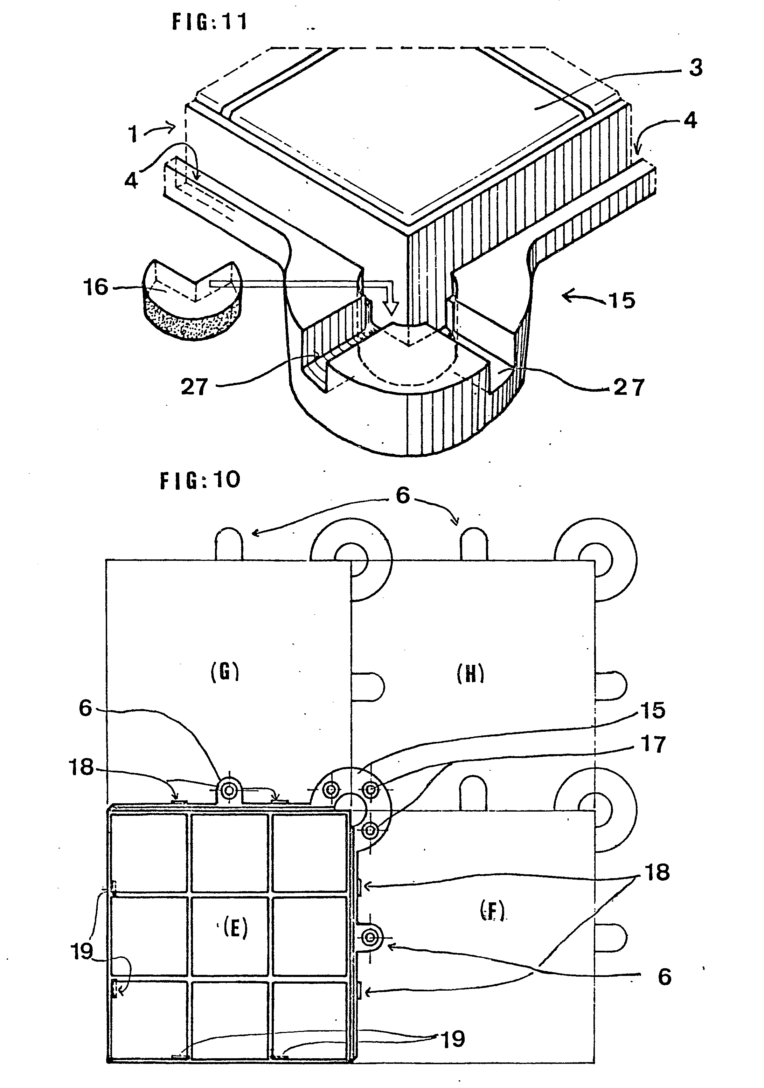

. Figure 10 : une variante de réalisation de dalle selon l'invention et son mode de liaison avec des dalles adjacentes ;

. Figure 11 : le détail, en perspective, de l'excroissance (ou noeud de liaison) prévue sur un angle de chaque dalle, conformément à la figure 10 ;

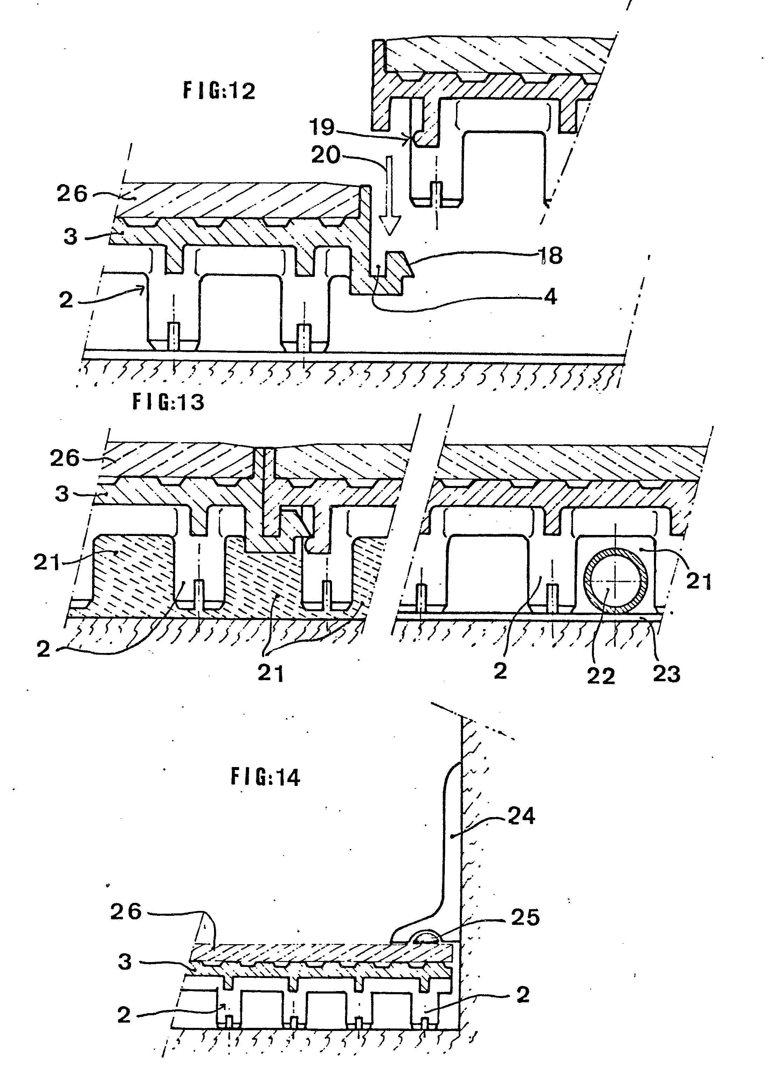

. Figure 12 : un mode de jonction perfectionné entre deux dalles, par clipsage à enclenchement vertical ;

. Figure 13 : des variantes d'équipement de la partie inférieure d'une dalle pour diverses applications ; et :

. Figure 14 : la finition d'un angle à la jonction sol-mur pour un revêtement de sol à l'aide de dalles selon l'invention.

Comme on peut le voir sur les figures 1 à 9, une dalle selon l'invention comporte à sa partie inférieure une semelle, désignée de façon globale par le chiffre 1, réalisée en une seule pièce, par exemple par moulage d'une matière plastique comme une polyoléfine, un copolymère d'oléfine, un polychlorure de vinyle ou copolymère vinylique ou tout autre polymère ou copolymère thermoplastique et/ou caoutchouteux. Pour la clarté de l'exposé, cette semelle 1 peut être décomposée d'une part en une base 2, constituée par une série de décrochements arqués ou pontets formant une structure "hérisson" assurant à la fois la rigidité de chaque dalle et un espace pour la ventilation et, d'autre part, en une partie superficielle 3 chargée de recevoir un matériau de revêtement qui sera défini plus loin et assurant l'étanchéité.

Chaque dalle, par exemple de forme carrée ou rectangulaire conformément aux figures 1 et 4, comporte alternativement sur ses côtés une partie mâle et une partie femelle correspondant respectivement à des creux ou gorges 4 et à des saillies 5 qui permettent l'assemblage ou "clipsage" des dalles entre elles dans toutes les directions. Une telle liaison entre les bords de deux dalles adjacentes $D_1$ et $D_2$ est clairement illustrée sur la figure 5 dans la zone L.

Selon la réalisation illustrée sur les figures 2 à 6 chaque piètement 2 de la semelle 1 est ouvert de façon à constituer deux petites jambes 2' et 2" qui peuvent par exemple être destinées à la pénétration d'une colle ou autre moyen de fixation sur le support de base, s'il y a lieu.

Conformément à la structure visible sur les figures 3, 5 et 6, la surface supérieure de la semelle est discontinue et pourvue de cavités 12 pouvant servir de logement au surplus de la colle dans le cas où l'élément décoratif et d'étanchéification serait fixé sur la dalle ultérieurement et non lors de la fabrication de celle-ci. En outre, les dalles peuvent être munies d'oeillets ou brides 6 comme indiqué sur les figures 1 et 4, de façon à permettre, s'il y a lieu, une fixation par clouage, vissage ou autre moyen.

L'élément d'encastrement sur la face supérieure de la semelle peut être de différents types. Par exemple, sur les figures 8 et 9 il est représenté par un revêtement continu 7 qui peut être constitué par une plaque ou feuille en matériau plastique ou encore une moquette (voir figure 9) telles que l'une de celles utilisées pour les revêtements étanches traditionnels pour salles d'eau, cuisine, WC... d'appartements. Conformément à une variante intéressante et visible notamment sur les figures 1 et 4, le matériau décoratif et d'étanchéité est constitué par des carreaux 8 de céramique, grès ou analogues qui, par exemple peuvent être encastrés dans la semelle 1 lors de la fabrication de la dalle en introduisant ces carreaux au fond du moule lors de l'injection de la matière plastique destinée à former ladite semelle. Dans ce mode de réalisation, la face supérieure 3 de la semelle 1 est munie d'ergots 13 venus de moulage avec la semelle et qui servent de joints entre chaque carreau. L'invention permet ainsi de mettre à la disposition des constructeurs et spécialistes de l'aménagement intérieur d'appartements, bureaux ou analogues, des dalles précarrelées de dimensions diverses et prêtes à la pose à sec. Selon une variante, on peut mettre en oeuvre comme matériau décoratif ou fonctionnel du bois, de la pierre, du marbre ou tout autre produit.

La figure 6 montre un mode de liaison entre deux dalles à angle droit, par exemple à la jonction du sol et d'un mur. On dispose au sol la plaquette 9 de la figure 7 dont la largeur 1 est légèrement supérieure à la distance d entre deux pontets de façon que les griffes 10 puissent toujours saisir un pontet sans avoir à viser et à tâtonner. L'étanchéité entre les deux plaques verticales est assurée grâce à un joint 11, par exemple joint extrudé ou baguette de silicone.

Bien entendu, et conformément à un autre avantage de la conformation des dalles selon l'invention, chaque élément constitutif d'une dalle peut être découpé à un endroit quelconque pour effectuer des terminaisons et/ou des raccordements.

Un cas d'application de revêtement selon l'invention est très schématiquement illustré sur la figure 8 montrant un assemblage de dalles, posé sur un plancher 14 destiné à constituer le support de base d'une pièce du type salle d'eau. La circulation de l'air selon les flèches est totale et permanente dans l'espace créé entre la base 2 de la semelle et le support 14. Cet air de convection assure l'évacuation de l'humidité latente du bois et chemine le long et autour des parois verticales (par exemple un mur) pour s'échapper en un ou des points d'ouverture ménagés à la partie supérieure de la pièce. Ainsi le support de base est constamment ventilé et protégé de la dégradation et/ou du pourrissement.

Les figures 10 à 14 illustrent des variantes de réalisation et de pose de dalles entrant également dans le cadre de l'invention et constituant des applications particulièrement avantageuses.

Comme on peut le voir sur les figures 10 et 11, une dalle selon l'invention est munie, selon un premier perfectionnement, d'une excroissance angulaire 15, ici solidaire de la semelle 1 et constituée dans l'exemple illustré par une partie de couronne sphérique prolongeant les deux rainures ou creux 4 de deux parois contiguës de la dalle. Cette couronne 15 est prévue pour recevoir une pastille 16 en matière souple conformée pour servir de joint lors du montage de quatre dalles contigues. La couronne est en outre munie de rainures 27 permettant l'emboîtement étanche de dalles adjacentes. Le montage, illustré sur la figure 10, s'effectue dans l'ordre : dalle (E) puis dalle (F), dalle (G) et enfin dalle (H). La couronne 15 peut être munie de perforations 17 pour un éventuel assujettissement par vis des dalles au support de base.

La figure 12 et la figure 13 (partie de gauche) illustrent un perfectionnement de clipsage à enclenchement vertical, avec verrouil-

0044371

lage, de plusieurs dalles entre elles. A cet effet, une paroi (par exemple droite) de dalle comporte, sur la plus petite des deux branches en U délimitant la gorge 4, une partie mâle constituée par un retour biseauté à partie saillante 18, alors que la paroi correspondante (par exemple gauche) de la dalle adjacente est munie d'un téton à épaulement 19, l'emboîtement des deux dalles s'effectuant dans le sens de la flèche 20 pour donner un clipsage illustré sur la partie gauche de la figure 13. En pratique, comme on le voit sur la figure 10, on peut prévoir par exemple deux éléments mâles 18 sur deux côtés contigus de la dalle et deux élément femelles 19 sur chacun des deux côtés respectivement opposés.

Selon une variante d'application visible sur la figure 13 (partie gauche), les espaces libres 21 entre les pontets 2 de la base en structure de hérisson de la dalle peuvent être remplis de matériau isolant phonique et/ou thermique dans le cas, par exemple, où un revêtement de dalle selon l'invention est posé sur béton en construction neuve, pour application en intérieur ou en extérieur.

Sur la partie droite de la figure 13, on a illustré une autre variante selon laquelle les espaces libres 21 sont munis, en tout ou partie, de canalisations à circulation de fluide (eau ou autre) par exemple de type "avadis" ou équivalent. Dans ce cas, on peut en outre prévoir à la base de la semelle de la dalle la mise en place d'une matière isolante 23.

La figure 14 montre un mode de réalisation pour la finition d'une liaison sol-mur lors de la pose d'un revêtement de dalles. Une plinthe continue 24, par exemple en matière plastique extrudée, semi-rigide, est posée à l'angle ; elle est munie in situ, lors du montage, d'un joint souple continu 25 par exemple du type "compriband" ou équivalent.

Comme dit ci-dessus le revêtement externe (ou matériau décoratif) qui équipe la face supérieure de chaque dalle peut être constitué par divers matériaux tels que bois, pierre, marbre, carreaux métalliques, carreaux céramiques ou analogues. Certains revêtements, comme par exemple les carreaux de céramiques, peuvent être préjointoyés en usine avec des joints souples, en polyuréthanne ou autre matière plastique, puis fixés sur l'assiette plane de la dalle ou mis en place lors de la fabrication par injection des dalles.

## R E V E N D I C A T I O N S

1. Dalles associables entre elles pour la réalisation sur divers supports de base de revêtements ayant une surface externe étanche à l'eau et une structure sous-jacente permettant une circulation totale et permanente de fluide entre le revêtement et le matériau constitutif du support de base, caractérisées en ce qu'elles comportent une semelle unitaire (1) en matière plastique munie ; à sa base d'une succession de pontets (2) en forme d'arches dont les piètements reposent sur le support de base et, à sa partie supérieure, d'une assiette (3) apte à recevoir un matériau décoratif ou fonctionnel (8, 26) ; et en ce qu'elles sont munies alternativement sur chaque côté de leur pourtour de gorges (4) et de saillies (5) permettant de faire coopérer entre elles plusieurs dalles adjacentes pour assurer une liaison étanche.

2. Dalles selon la revendication 1, caractérisées en ce qu'elles comportent en outre chacune, à l'un des angles, un élément en saillie (15) au niveau de la semelle (1) et apte à recevoir une rondelle (16) en matériau souple, ledit élément, muni de rainures (27), devenant invisible lors de la pose de quatre dalles adjacentes et pouvant comporter des perforations (17).

3. Dalles selon la revendication 1, caractérisées en ce que les piètements des pontets sont pourvus d'une fente de façon à constituer deux jambes (2', 2") entre lesquelles peut s'insérer de la colle ou une pince à clipser, lors de la pose sur le support de base.

4. Dalles selon l'une quelconque des revendications 1 à 3, caractérisées en ce que l'assiette (3) de la semelle (1) possède une surface discontinue par la présence d'évidements ou cavités (12) servant de logements pour le collage du matériau décoratif et étanche.

5. Dalles selon la revendication 4, caractérisées en ce que ledit matériau est constitué par un produit choisi dans le groupe : plaque continue de matière plastique, bois, pierre, marbre, carreaux de céramique.

6. Dalles selon l'une quelconque des revendications 1 à 5, caractérisées en ce qu'elles comportent sur leur pourtour des oeillets (6) solidaires de la semelle permettant une fixation sur sol ou mur.

7. Dalles selon la revendication 2 caractérisées en ce qu'elles sont munies sur chaque paire de parois opposées d'ensembles : élément mâle à décrochement biseauté (18) et élément femelle à épaulement (19), aptes à assurer un verrouillage des dalles entre elles.

8. Dalles selon l'une quelconque des revendications 1 à 7, caractérisées en ce que les espaces libres (21) entre les pontets (2) de la semelle (1) sont garnis d'un produit choisi dans le groupe : matériau isolant, canalisations (22) de fluide.

9. Dalles selon l'une quelconque des revendications 1 à 8, caractérisées en ce qu'elles sont associées, pour une jonction à angle droit de revêtement sol-mur, à une pince (10) dont les griffes se referment sur un piètement de pontet (2) et à un joint étanche (11).

10. Dalles selon l'une quelconque des revendications 1 à 8, caractérisées en ce qu'elles sont associées, pour un raccordement sol-mur, à une plinthe (24) conformée en matériau semi-rigide et munie d'un joint souple précompressé (25).

0044371

1/5

FIG 2

FIG 3

FIG 1

**FIG 5**

**FIG 6**

**FIG 7**

**FIG 9**

FIG 4

FIG 8

FIG:11

FIG:10

FIG:12

FIG:13

FIG:14

**Office européen
des brevets**

**RAPPORT DE RECHERCHE EUROPEENNE**

| Catégorie | DOCUMENTS CONSIDERES COMME PERTINENTS<br>Citation du document avec indication, en cas de besoin, des parties pertinentes | Revendication concernée |
|---|---|---|
| | DE - U1 - 7 809 216 (H. WEDI)<br>* revendications 1 à 3; fig. 1, 2 *<br>-- | 1 |
| | DE - U - 7 038 647 (AEROTHERM AG)<br>* revendications 1, 2; page 4 *<br>-- | 1 |
| A | AT - B - 245 217 (P. BOSAK)<br>* fig. 2 *<br>-- | |
| A | DE - A - 2 232 584 (DYNAMIT NOBEL AG)<br>* document complet *<br>-- | |
| A | DE - A - 1 784 740 (J. KANTOROWICZ)<br>* fig. 1 à 12 *<br>-- | |
| A | AT - B - 297 287 (A. GNADLINGER)<br>* fig. 1 à 4 *<br>-- | |
| A | DE - U - 7 529 506 (A. SCHOMBURG)<br>* fig. 1 à 10 *<br>---- | |

**CLASSEMENT DE LA DEMANDE (Int. Cl.²)**

E 04 F 15/02

E 04 F 13/08

E 04 C 2/10

E 04 B 1/62

**DOMAINES TECHNIQUES RECHERCHES (Int. Cl.²)**

E 04 B 1/00

E 04 C 2/00

E 04 F 13/00

E 04 F 15/00

**CATEGORIE DES DOCUMENTS CITES**

X: particulièrement pertinent

A: arrière-plan technologique

O: divulgation non-écrite

P: document intercalaire

T: théorie ou principe à la base de l'invention

E: demande faisant interference

D: document cité dans la demande

L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| Berlin | 24-02-1981 | v. WITTKEN |

OEB Form 1503.1   06.78